# EUROPEAN PATENT APPLICATION

(11) **EP 0 741 481 A2**
(43) Date of publication of application: **06.11.1996**
(21) Application number: 96302835.2
(22) Date of filing: 23.04.1996
(51) Int. Cl.: H04M 11/06, H04M 3/42

(54) **Modem communication interoperability with call waiting services**

(30) Priority: 01.05.1995 US 432555
(71) Applicant: AT&T IPM Corp., Coral Gables, Florida 33134 (US)
(72) Inventor: Civanlar, Mehmet Reha, Red Bank, New Jersey 07701 (US); Haskell, Barin Geoffry, Tinton Falls, New Jersey 07724 (US); Dagdeviren, Nuri Ruhi, Red Bank, New Jersey 07701 (US)
(74) Representative: Buckley, Christopher Simon Thirsk

(57) **Abstract**

A novel modem communication method provides interoperability between modems and call waiting services. The method operates in conjunction with a first modem (102) adapted for communications with a second modem (104) over a telephonic communications link (116). Upon receipt of a call waiting alerting tone corresponding to a third party incoming call (from 120), the first modem (102) sends the second modem (104) a call waiting notification signal. In response to the call waiting notification signal, the second modem sends the first modem a call waiting acknowledgment signal, and the first and second modems enter an idle state. In the idle state, the modems remain connected to the telephonic communications link, but stop sending and receiving data. The first modem remains in the idle state until the third party incoming call is terminated, whereupon, in response to such termination, the first modem sends a resumption signal to the second modem. Upon receipt of the resumption signal, the second modem exits the idle state and resumes the sending and receiving of data.

## Description

### Background Of the Invention

### 1. Field of the Invention

The invention relates generally to telephonic communications, and more particularly to modem communication techniques that are compatible with call waiting services.

### 2. Background Art

Call waiting is a popular optional service offered to telephone customers by telephone company Local Exchange Carriers (LECs). Call waiting is useful in situations where a customer is engaged in telephonic communications with a first party, and an incoming call is received from a second party. Upon receipt of such an incoming call, the LEC momentarily interrupts the telephonic communications link between the customer and the first party, and transmits an alerting tone to the customer, notifying the customer as to the existence of the incoming call. Meanwhile, the LEC sends the calling party a ringback signal instead of a busy signal.

As call waiting increases in popularity, the proliferation of modems continues to increase dramatically. However, at present, modem communications do not provide interoperability with call waiting services. If the LEC sends a customer an alerting tone when the customer is engaged in modem-to-modem communications, the tone disrupts the modem connection, sometimes causing the loss of data, the receipt of erroneous data, and/or loss of the modem-to-modem communications link. Moreover, the customer scrambles to pick up an extension phone, oftentimes disconnecting both the calling party and the modem-to-modem link in the process.

Existing modem error correction protocols are not fully compatible with call waiting services. If the modem uses a state-of-the-art error correction protocol such as V.42, the modem gracefully ignores the disruption caused by the alerting tone, but the customer is no longer notified as to the existence of an incoming call from the second party, and the purpose of the call waiting service is defeated.

Customers using modems that are not equipped with error correction protocols sometimes disable the call waiting service during modem-to-modem communications by dialing a DTMF access code before and after such communications. This defeats an important purpose of the call waiting service, since some modem connections are of a relatively long duration. For example, if a document of a few hundred pages is being sent via facsimile, incoming callers may receive a frustrating busy signal for hours.

Existing techniques for enabling a modem to detect and process a call waiting interruption are disclosed in U. S. Patent No. 4,852,151 issued to Dittakavi et al. and entitled, "Modem with Call Waiting" (hereinafter, the Dittakavi patent), and U. S. Patent No. 5,287,401 issued to Lin and entitled, "Apparatus and Method for a Modem for Detecting a Call Waiting Signal" (hereinafter, the Lin patent). The Dittakavi patent detects the call waiting alerting tone as a loss of carrier followed by energy in a limited bandwidth termed the "Call Progress Band". The Lin patent discloses a substantially similar method of detecting the alerting tone which operates by detecting carrier loss.

Both the Dittakavi patent and the Lin patent are directed to techniques for enhancing the performance of a single modem during a call waiting event. Such an approach neglects the fact that modem communication links include a first modem connected to a second modem, and that the overall performance of the communications link may be improved by coordinating the actions of the first modem with the actions of the second modem. What is needed is a technique for providing interoperability between modems and call waiting services that advantageously exploits modem-to-modem communications.

### Summary of the Invention

A novel modem communication method provides interoperability between modems and call waiting services. The method operates in conjunction with a first modem engaged in communications with a second modem over a telephonic communications network. The first modem is coupled to a first processor and the second modem is coupled to a second processor. Upon receipt of a call waiting alerting tone corresponding to a third party incoming call, the first modem generates a call waiting notification signal. The first processor receives the call waiting notification signal from the first modem, and the first processor then sends another call waiting notification signal to the second processor via the first and second modems. In response to the call waiting notification signal, the second processor sends a call waiting acknowledgment signal to the first processor via the second and first modems, and the first and second modems enter a hold state. In the hold state, the first and second modems remain connected to the telephonic communications network, but communications between the first and second modems ceases until the second modem receives a resumption signal. The first modem remains in the hold state until the third party incoming call is terminated, whereupon, in response to such termination, the first processor sends a resumption signal to the second modem via the first modem. Upon receipt of the resumption signal, the second modem exits the hold state and resumes the sending and receiving of data.

### Brief Description of the Drawings

FIG. 1 is a hardware block diagram showing a modem-to-modem communications link; and
FIGs. 2, 3, 4, 5, 6, and 7 together comprise a software flowchart setting forth the sequence of operations performed by the hardware configuration of FIG. 1.

### Detailed Description of the Preferred Embodiments

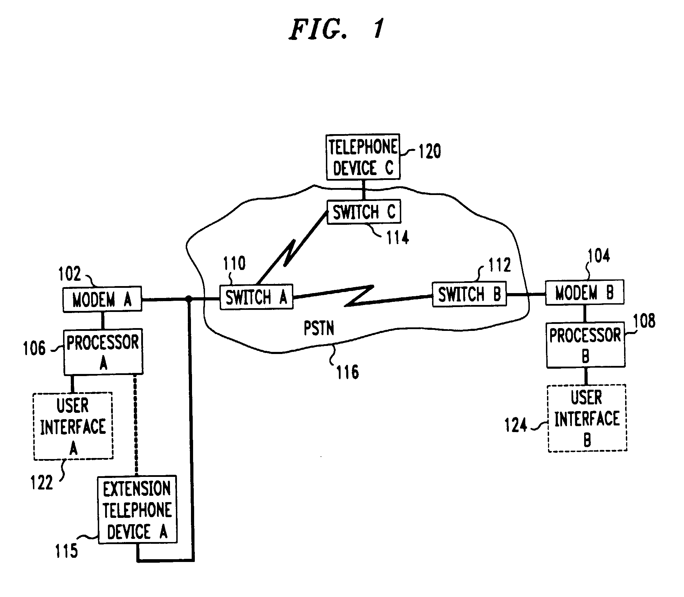

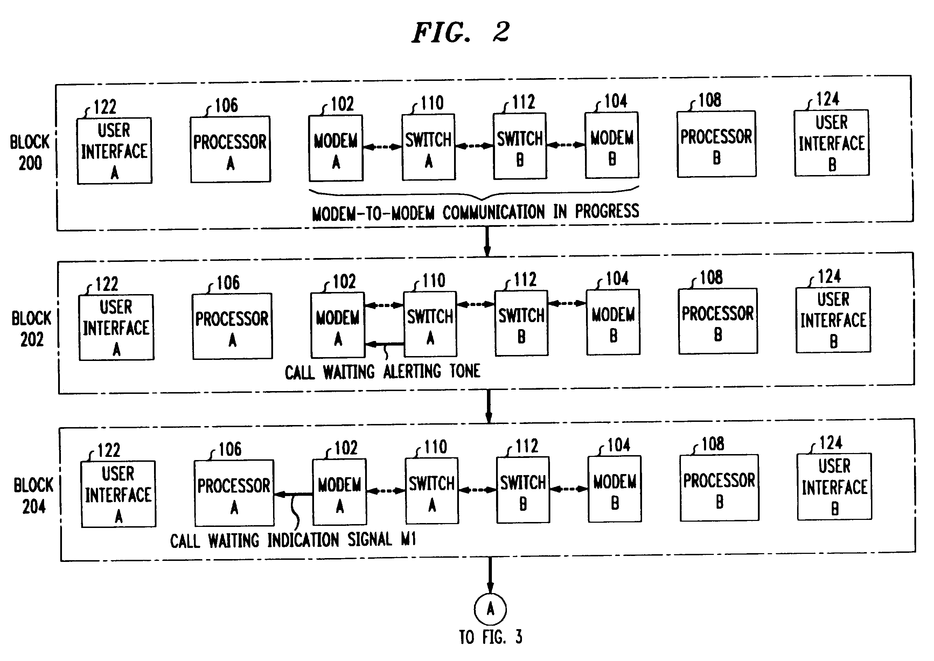

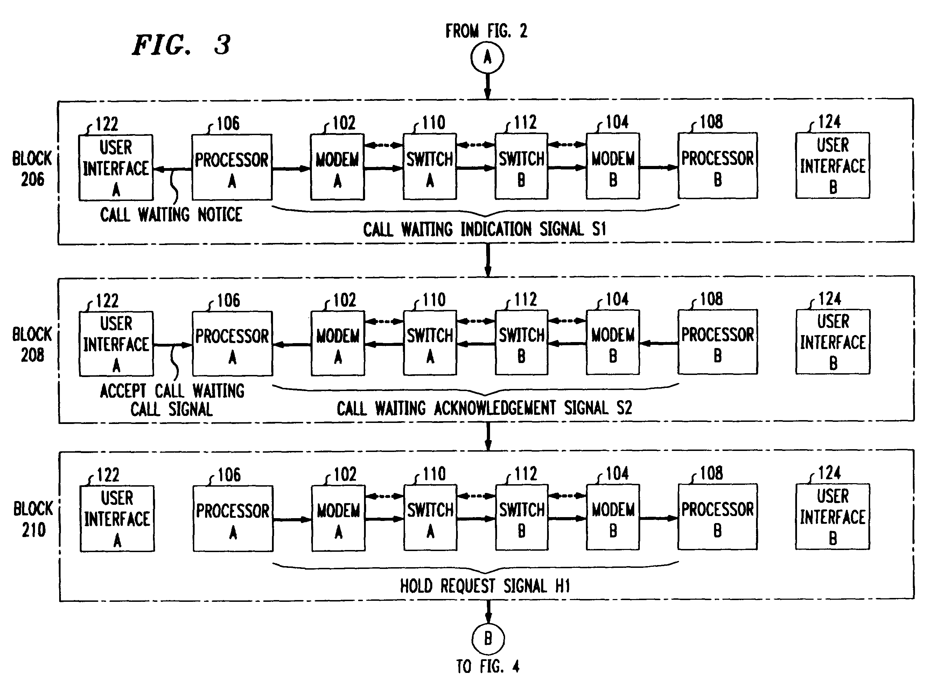

Refer now to FIG. 1 which is a hardware block diagram showing a modem-to-modem communications link between a first modem shown as modem A 102, and a second modem shown as modem B 104. Modem A 102 is controlled by processor A 106, and modem B 104 is controlled by processor B 108. Although processor A 106 is shown as a separate element with respect to modem A 102, and processor B 108 is shown as a separate element with respect to modem B 104, this is not a requirement. Processor A 106 may be incorporated into modem A 102, and/or processor B 108 may be incorporated into modem B 104. One or both of processor A 106 and processor B 108 may actually represent microprocessors that are incorporated into conventional personal computers. Modem A 102 and/or modem B 104 may represent modem cards integrated into personal computers. Irrespective of the actual hardware used to implement processor A 106 and processor B 108, these processors are adapted to execute software programs that implement data terminal equipment (DTE) functions, such as the software program of FIGS. 2 - 7.

According to one embodiment disclosed herein, modem A 102 and modem B 104 are equipped to respond to AT modem commands. AT modem commands are described in TIA/EIA standard, ANSI/TIA/EIA - 602 - 1992 "Data Transmission Systems and Equipment - Serial Asynchronous Automatic Dialing and Control". However, it is not an absolute requirement that modem A 102 and modem B 104 be equipped to implement AT commands. Other types of modem commands known to those skilled in the art may be employed, including modem command sets that represent an enhancement over the conventional AT command set described in the above-cited reference.

Processor A 106 is coupled to user interface A 122, and processor B 108 is coupled to user interface B 124. Conventional user interface devices well-known to those skilled in the art may be employed to implement user interface A 122 and user interface B 124. These user interface devices may include various combinations of keyboards, video display screens, and/or DTMF pads. An extension telephone device A 115, which, for example, is a conventional telephonic device, is connected to switch A 110 in parallel with modem A 102. Extension telephone device A 115 is coupled to processor A 106. Although the configuration of FIG. 1 shows a dedicated connection between processor A 106 and extension telephone device A 115, this is for illustrative purposes only, and other schemes are possible. For example, extension telephone device A 115 could be effectively coupled to processor A 106 by a telephone device user that responds to prompts, commands, and/or messages issued by processor A 106 and outputted by user interface device 122, even though there is no direct connection between extension telephone device A 115 and processor A 106.

Modem A 102 is connected to Switch A 110, and modem B 104 is connected to switch B 112. Switch A 110, switch B 112, and switch C 114 represent a portion of a public switched telephone network (PSTN) 116. Switch C 114 is connected to telephonic device C 120, which may represent a POTS telephone, a modem, or various other types of telephonic devices. PSTN 116 is equipped to interconnect switch A 110, switch B 112, and/or switch C 114 in such a manner so as to selectively provide telephonic communications links among two or more of these switches. Switch A 110 is also equipped to implement a call waiting function. This function operates, for example, after the PSTN 116 provides a telephonic communications link between switch A 110 and switch B 112.

Upon receipt of an incoming telephone call from telephonic device C 120 directed to modem A 102, a switch A 110 not equipped to implement call waiting for modem A 102 would send telephonic device C 120 a busy signal, indicating that modem A 102 is busy. Meanwhile, the PSTN 116 does not disturb the telephonic link between switch A 110 and switch B 112. However, if switch A 110 implements call waiting for modem A 102, then switch A 110 sends telephonic device C 120 a ringback signal, and switch A 110 sends modem A 102 a call waiting alerting tone, temporarily interrupting the telephonic link between modem A 102 and modem B 104. When switch A 110 sends out this call waiting alerting tone in response to the incoming call from telephonic device C 120, modem A 102 is said to be confronted with a call waiting event. Illustrative characteristics for this call waiting alerting tone are set forth in a standard generally known to those skilled in the art as Bellcore Technical Reference LSSGR, Section 6.4, Table 6.4-8, published by Bellcore.

The call waiting alerting tone described in the above-cited reference is a 440-Hz tone of 100 to 300 milliseconds in duration that is repeated twice at a regular interval. This call waiting alerting tone is especially disruptive when switch A 110 is engaged in providing modem communications over PSTN 116. In such a situation, modem A 102 may produce spurious data, data may be lost, and/or the modem-to-modem communications link using switch A 110 and switch B 112 may be disconnected, requiring the re-establishment of modem-to-modem communications through the PSTN 116. Upon receipt of a call waiting alerting tone, the user of modem A 102 may scramble to answer an extension telephone connected to switch A 110, which may cause the incoming call from switch C 114 to be dropped, and/or the termination of the connection between switch A 110 and switch B 112.

To provide for the graceful treatment of a call waiting event, processor A 106 and processor B 108 should both be equipped to implement the software functions described in the flowchart of FIGs. 2, 3, 4, 5, 6, and 7. The existence or non-existence of the requisite software at both processor A 106 and processor B 108 is established during the initial connection sequence shortly after the PSTN 116 provides a connection between switch A 110 and switch B 112. FIGS. 2-7 apply to the hardware scenario of FIG. 1 where modem A 102 is engaged in an on-line session with an Internet access provider 118 coupled to modem B 104. While modem A 102 is engaged in communication with modem B 104 through PSTN 116, telephonic device C 120 is used to place an incoming call over PSTN 116 directed to modem A 102. The call from telephonic device C 120 can be a voice call, a fax call, or another modem call, such as a call from a service that uses a modem for the purpose of automatically downloading stock quotes to subscribers.

When the call from telephonic device C 120 arrives at switch A 110, switch A 110 sends a call waiting alerting tone to modem A 102 and temporarily cuts off the communication path from modem A 102 to switch B 112 for the duration of the tone. The specific effect of the tone and the interruption of communications between the two modems, modem A 102 and modem B 104, will depend upon the modulation scheme employed by the modems. However, irrespective of the specific effect of the tone, the addition of the call waiting alerting tone to the incoming signal from modem B 104 will lead to the corruption of the modem signal.

Detection of this call waiting event by Modem A 102 is performed as follows. The characteristics of the call waiting alerting tone provided by PSTN 116 are governed by regional telephone company and/or ATT technical standards as outlined, for example, in Bellcore Technical Reference LSSGR, Section 6.4, Table 6.4-8, published by Bellcore, and these characteristics permit automatic identification of the alerting tone. The nominal amplitude of the call waiting alerting tone is approximately -13 dBm, which is comparable to the approximate maximum amplitude of a modem signal, and the tone lasts for about 100 to 300 msec.

In one embodiment, to detect a call waiting event, modem A 102 conducts a band-limited power measurement to measure power concentrated in a narrow bandwidth around a center frequency of 440 Hz, which is the nominal frequency of the call waiting alerting tone. In this manner, the increase in received power upon receipt of a call waiting alerting tone is much more pronounced than is the case if overall power increases were to be measured. Moreover, the bandwidth-limited measurement provides an enhanced level of immunity to noise, transients, static, and sources of electromagnetic interference. The call waiting alerting tone can therefore be detected readily and reliably. The processing of a call waiting event is greatly enhanced if modem A 102 and modem B 104 are communicating using an error correction protocol such as V.42/HDLC. This error correction protocol is well-known to those skilled in the art, and is at present a very widely-utilized protocol in the context of data modems.

Referring now to the flowchart of FIGs. 2-7, modem A 102 processes a call waiting event as follows. Initially, at block 200 (FIG. 2), a call is in progress between modem A 102 and modem B 104 via a connection between switch A 110 and switch B 112. Two switches -- namely, switch A 110 and switch B 112 -- are shown for purposes of illustration, it being understood that switch A 110 and switch B 112 together could represent a single switch, or could represent any convenient number of switches. The dotted lines of blocks 200-212 are employed to indicate the existence of a modem-to-modem communications path between modem A 102 and modem B 104. At block 200, processor 106 is monitoring the signal received by modem A 102 for the existence of a call waiting alerting tone. Modem A 102 is exchanging data with modem B 104 via switch A 110 and switch B 112. The operations of block 200 are performed until the PSTN 116 (FIG. 1) receives a call waiting call directed to modem A 102, or until communications between modem A 102 and modem B 104 have been completed.

At block 202, telephonic device C 120 attempts to place a telephone call to modem A 102, but modem A 102 is already communicating with modem B 104 via switch A 110 and switch B 112. Since switch A 110 is equipped to implement call waiting, switch A 110 sends a call waiting alerting tone to modem A 102. This call waiting alerting tone temporarily interrupts the communications link between modem A 102 and modem B 104. Meanwhile, switch A 110 sends switch C 114 a ringback signal. Modem A 102 detects the call waiting alerting tone at block 204. In response to the call waiting alerting tone, modem A 102 sends a call waiting indication signal M1 to processor A 106.

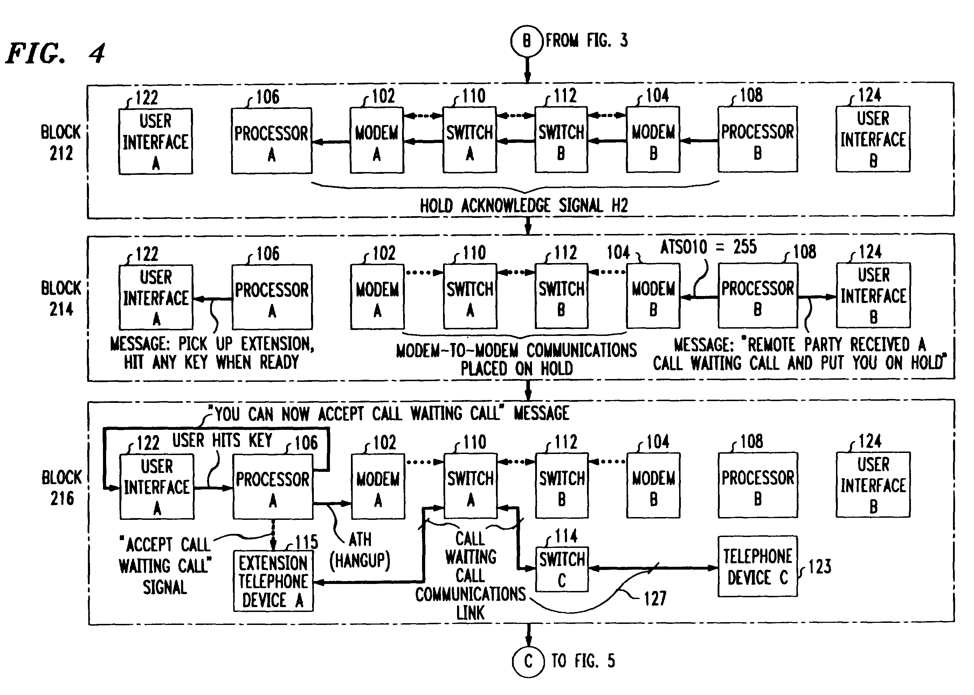

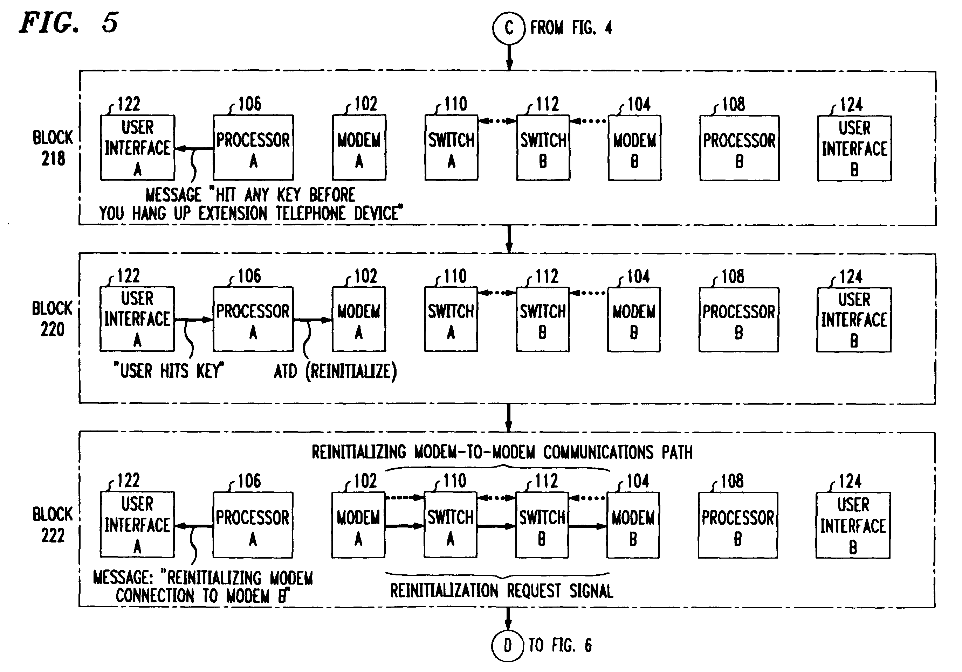

Program control now progresses to FIG. 3. At block 206, processor A 106 responds to signal M1 by sending a call waiting notice signal to user interface A 122, and by sending a call waiting indication signal S1 to processor B 108. Signal S1 is transmitted from processor A 106 to processor B 108 via modem A 102, switch A 110, switch B 112, and modem B 104. User interface A 122 responds to the call waiting notice signal by generating a humanly discernible message specifying that a call waiting call has been received, and prompting the user as to whether or not the call waiting call should be accepted. This prompt, hereinafter referred to as a user interface prompt, could, for example, be of the form "You are receiving a call waiting call. If you wish to accept this call, press the "A" key and modem communications will temporarily be suspended until the call waiting call is completed. However, if you do not wish to accept the call waiting call, press the "B" key."

Program control progresses to block 208, where processor B 108 responds to the receipt of call waiting indication signal S1 by sending a call waiting acknowledgment signal S2 to processor A 106. This signal is transmitted via modem B 104, switch B 112, switch A 110, and modem A 102. In response to the call waiting acknowledgment signal S2, processor A 106 monitors any user input received by user interface device A 122. If the user indicates that the call waiting call is to be accepted by entering the appropriate input into user interface A 122 as specified by the aforementioned user interface prompt, program control progresses to block 210. If, however, the user indicates that the call waiting call is not to be accepted as specified by the user interface prompt, then program control reverts back to block 200 (FIG. 2). For example, assuming that the user indicates that the call waiting call is to be accepted, user interface A 122 generates an "accept call waiting call" signal, this signal is received by processor A 106, and program control advances to block 210.

At block 210, processor A 106 generates a hold request signal H1 and sends signal H1 to processor B 108 via modem A 102, switch A 110, switch B 112, and modem B 104. Processor B responds to this hold request signal H1 at block 212 (FIG. 4) by generating a hold acknowledge signal H2 and sending signal H2 to processor A 106. Signal H2 is transmitted to processor A 106 via modem B 104, switch B 112, switch A 110, and modem A 102. Next, at block 214, processor A 106 instructs modem A 102 to place modem-to-modem communications on hold, and processor A 108 instructs modem B 104 to place modem-to-modem communications on hold. Modem A 102 and modem B 104 place modem-to-modem communications on hold, indicated by the dotted lines in blocks 214-222 (in contrast to the dashed lines of blocks 200-212). Processor A 106 downloads a message to user interface A 122 instructing the user to pick up extension telephone device A 115 (FIG. 1), and to enter any key (or, alternatively, to supply another conventional type of input) on user interface A 122 when the user is ready (i.e., after the user has placed extension telephone device A 115 off-hook). Processor B 108 sends to user interface B 124 a message informing the user that the remote party (i.e., the party using modem A 102) has received a call waiting call and, consequently, has placed communications with your modem (i.e., modem B 104) on hold.

At block 216, the user of modem A 102 enters a key on user interface A 122 in response to the message issued by processor A 106 in the immediately preceding block. Processor A 106 responds to this key entry by first sending the ATH command to modem A 102, thereby instructing modem A 102 to hang up. Then, processor A 106 sends a message of the form, for example, "You can now accept the call waiting call" to user interface A 122. At this time, the user is expected to use extension telephone device A 115 to accept the call waiting call in the conventional or usual manner. Alternatively, if a direct connection exists between processor A 106 and extension telephone device A 115, then the "accept call waiting call" signal is downloaded directly from processor A 106 to extension telephone device A 115. In response to the "accept call waiting call" signal, the extension telephone device A 115 applies a switch hook flash to the tip/ring line connected to switch A 110 in a manner so as to accept the call waiting call. The accepting of the call waiting call connects the call from switch C 114 to switch A 110. In this manner, extension telephone device A 115 is now engaged in communications with a telephone device C 123 connected to switch C 114.

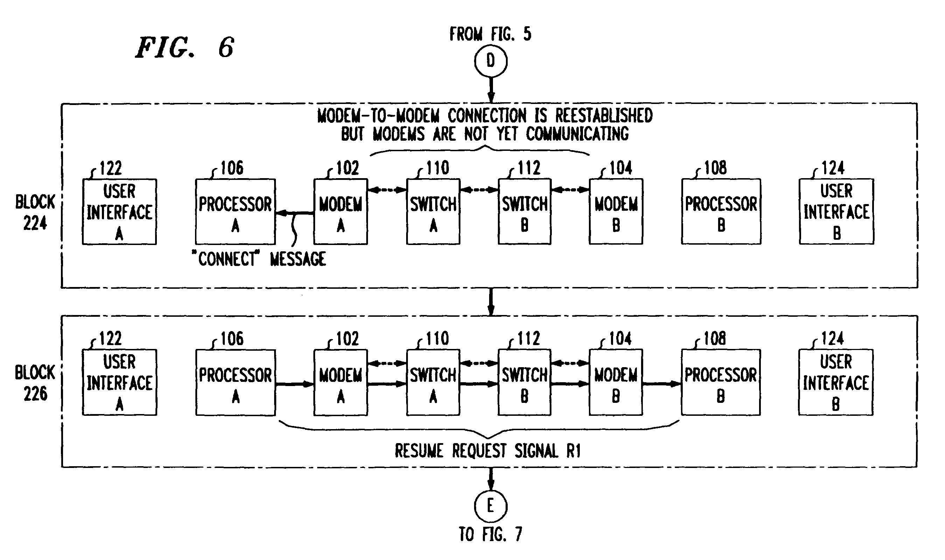

Program control progresses to block 218 (FIG. 5), where processor A 106 sends a message of the form, for example, "Hit any key before you hang up the extension telephone device", to user interface A 122. At block 220, communications between extension telephone device A 115 and telephone device C 123 have been completed. The user enters a key into user interface device A 115 signifying that the call waiting call is now over, and that extension telephone device A 115 is about to be hung up. Processor A 106 responds to this key press by sending an ATD (reinitialize) command signal to modem A 102. Next, at block 222, the modem-to-modem communications path between modem A 102 and modem B 104 is reinitialized. Modem A 102 sends a reinitialization request signal to modem B 104 via switch A 110 and switch B 112. Processor A 106 sends a message to user interface A 122 specifying that the modem connection to modem B 104 is being reinitialized.

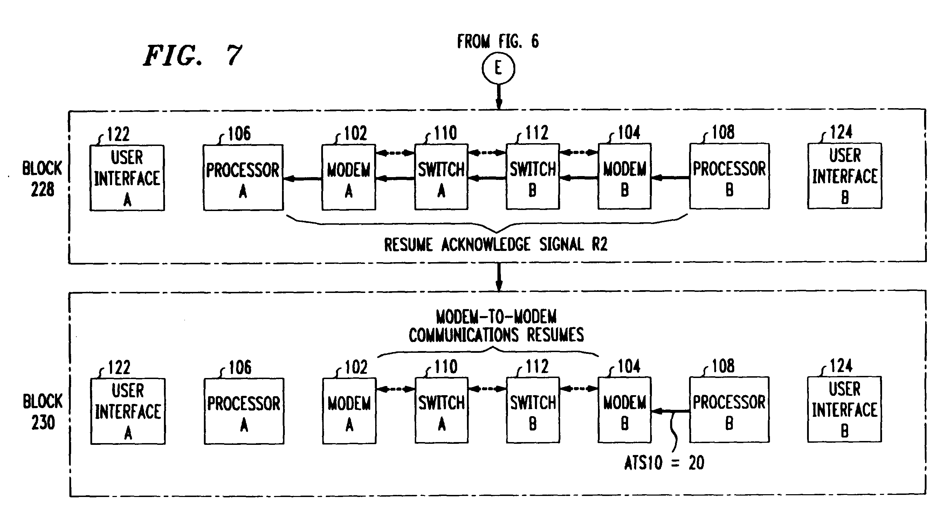

Program control advances to block 224 where a modem-to-modem communications path (i.e., connection) between modem A 102 and modem B 104 is reestablished, but the modems are not yet communicating data at this time. Once the communications path is established, modem A 102 sends a "connect" message to processor A 106 indicating the existence of a communications path between modem A 102 and modem B 104. At block 226, processor A responds to the "connect" message by sending a resume request signal R1 to processor B 108 via modem A 102, switch A 110, switch B 112, and modem B 104. Processor B 108 responds to the receipt of signal R1 by sending a resume acknowledge signal R2 to processor A 106 (FIG. 7, block 228). Signal R2 is transmitted via modem B 104, switch B 112, switch A 110, and modem A 102. Modem-to-modem communications between modem A 102 and modem B 104 are now fully resumed (block 230).

If modem A is coupled to a device equipped to implement speakerphone capabilities, the above procedure described in connection with FIGS. 2-7 may be simplified. In a system where modem A (FIG. 1, 102) is coupled to a speakerphone device, processor A 106 instructs modem A to answer the incoming call-waiting call after processor A 106 receives the hold acknowledge signal H2 from processor B 108 at block 212 (FIG. 4).

If the combination of modem B 104 and processor B 108 is not equipped to support the procedures discussed in connection with FIGs. 2-7, then processor A 106 is programmed to alert the user as to the existence of the incoming call waiting call by providing a message to user interface A 122. This message is a warning that, if the call waiting call is accepted, modem-to-modem communications may be dropped. During the time that the call waiting alerting tone interrupts communications between modem A 102 (FIG. 1) and modem B 104, processor A 106 and processor B 108 are programmed to invoke an error correction procedure of a type well known to those skilled in the art. Alternatively, if error correction techniques are not employed by processor A 106, the retraining procedure set forth in blocks 219-225 (FIG. 2) is performed to reestablish communications after such communications are interrupted by the call waiting alerting tones. If error correction techniques are not employed, modem A 102 may be disconnected from modem B 104 during the occurrence of each call waiting alerting tone.

According to one embodiment disclosed herein, the existence of a call waiting event is determined not by the existence of a momentary signal dropout, but instead by the receipt of a call waiting indication signal S1 (FIG. 3, block 206) at processor B 108. Processor B 108 responds to signal S1 at block 208 (FIG. 3) by generating an acknowledgment signal S2, and sending signal S2 to processor A 106 (FIG. 1). Processor B 108 instructs modem B 104 to hold the telephone line connected to switch B 112 off-hook, despite any disappearances of the carrier generated by modem A 102. The length of time for which this connection is held is specified by the value of a hold duration register, commonly referred to by those skilled in the art as an S10 register, included in modem B 104. This register is set to a special value, such as 255, to hold the telephone connection indefinitely.

Processor B 108 sends processor A 106 a hold acknowledge signal H2 indicating that modem B 104 will hold the telephonic communications link to switch B 112 for a period of time specified by the hold duration register (FIG. 3, block 212). The call waiting event terminates at block 220 (FIG. 5), signifying that the PSTN 116 connection between switch A 110 and switch C 114 has terminated. At block 226, a resumption request signal R1 is sent from processor A 106 to processor B 108. At this time, the value of the hold duration register (the S10 register) may be reset to specify a relatively short time duration, so that modem B 104 will hold the telephone connection to switch B 112 for dropouts caused by noise and transients that do not last longer than several hundred milliseconds (e.g., a value of 20). At block 228, (FIG. 7) a resume acknowledge signal R2 is sent from processor A 106 to processor B 108, and communications between processor A 106 and processor B 108 resumes.

The procedure of FIGs. 2-7 may be difficult to perform in an operational environment where modem B 104 is not equipped to support the V.42 standard. An alternative approach for a modem B 104 that is not equipped to implement HDLC is to retrain modem B 104 immediately after notification of the call waiting event is provided to processor A 106 (FIG. 2, block 204). This retraining procedure is performed just in case the user of modem A 102 elects to ignore the incoming call waiting call. Otherwise, if the retraining procedure was not performed at this time, the call to modem B 104 would be terminated prior to the completion of the retraining procedure.

Minimal support is required at modem B 104 to hold the telephone line connected to switch B 112 indefinitely without receipt of carrier. This support is provided in the form of the hold duration register (the S10 register), which is set to a special value, 255. Although most modems interpret this special value of the S10 register to signify an indefinite hold, other modems do not and will need to be upgraded to work with a peer modem A 102 which supports call waiting.

FIGS. 2-7 set forth various methods for handling call waiting calls received on a telephonic communications link implementing modem-to-modem communications. These methods substantially improve both modems and call waiting services by providing interoperability. Especially attractive implementation of these methods is possible in the operational environment of integrated fax/modem/speakerphone/answering machine systems that have recently become popular.

## Claims

1. A communication method for providing interoperability between a first modem, a second modem, and a public switched telephone network (PSTN) equipped to implement a call waiting service, the method CHACTERIZED BY THE STEPS OF:
(a) establishing a first communications link between the first modem and the second modem over the PSTN;
(b) upon recognition of a call waiting event notification transmitted from the PSTN to the first modem, the event notification corresponding to a third party incoming call, putting the first communications link on hold, establishing a second communications link between the first modem and the third party incoming call; and
(c) upon termination of the third party incoming call, resuming the first communications link.

2. A modem communication method for providing interoperability between a first modem, a second modem, and a public switched telephone network (PSTN) equipped to implement a call waiting service, the method CHARACTERIZED BY the following steps:
(a) establishing a communications link between the first modem and the second modem over the PSTN;
(b) upon recognition of a call waiting event notification transmitted from the PSTN to the first modem, the event notification corresponding to a third party incoming call, the first modem sending the second modem a call waiting notification signal;
(c) in response to the call waiting notification signal, the second modem sending the first modem a call waiting acknowledgment signal;
(d) in response to user request, the first modem sending the second modem a hold request signal;
(e) in response to the hold request signal, the second modem sending the first modem a hold acknowledgment signal;
(f) the first modem responsive to the . hold acknowledgment signal to enter a modem idle state, the second modem then entering the modem idle state, the modem idle state being defined such that the first and second modems remain connected to the communications link but no data are conveyed between the first and second modems; the first and second modems remaining in the modem idle state until the third party incoming call is terminated;
(g) in response to termination of the third party incoming call, the first modem exiting the modem idle state and sending a resumption signal to the second modem; and
(h) upon receipt of the resumption signal, the second modem exiting the modem idle state and resuming the sending and receiving of data.

3. A first modem adapted for use with a public switched telephone network (PSTN) and a second modem, the first modem CHARACTERIZED BY:
(a) a communications port for communicating with the second modem over a telephonic communications link;
(b) a call waiting event notification receiver responsive to a call waiting event notification sent by the PSTN and corresponding to a third party incoming call;
(c) a notification signal transmitter, responsive to the event notification receiver, for sending the second modem a call waiting notification signal in response to the receipt of a call waiting event notification by the event notification receiver;
(d) an acknowledgment signal receiver responsive to an acknowledgment signal sent by the second modem to place the first modem into an idle state upon receipt of the acknowledgment signal such that the first modem remains connected to the telephonic communications link, but ceases sending and receiving of data, the first modem being placed into the idle state until (i) the third party incoming call is terminated, and/or (ii) an established time interval has expired;
(e) resumption signal generator means response to termination of the idle state for sending a resumption signal to the second modem.

4. A modem communications system adapted for use with a public switched telephone network (PSTN) having a call waiting service for sending a call waiting event notification in response to the receipt of an incoming call from a third party and directed to either of the first modem and the second modem while the first modem is engaged in communication with the second modem, the communication system CHARACTERIZED BY:
(a) a first modem including:
(i) a communications port for communicating with the second modem over a telephonic communications link;
(ii) an event notification receiver responsive to a call waiting event notification sent by the PSTN and corresponding to a third party incoming call;
(iii) a notification signal transmitter, responsive to the event notification receiver, for sending the second modem a call waiting notification signal in response to the receipt of a call waiting event notification by the event notification receiver;
(iv) an acknowledgment signal receiver responsive to an acknowledgment signal sent by the second modem to place the first modem into an idle state upon receipt of the acknowledgment signal such that the first modem remains connected to the telephonic communications link, but ceases sending and receiving of data, the first modem being placed into the idle state until (a) the third party incoming call is terminated, and/or (b) an established time interval has expired;
(v) a resumption signal generator response to termination of the idle state for sending a resumption signal to the second modem;
and
(b) a second modem comprising:
(i) an acknowledgment signal generator responsive to the call waiting notification signal from the first modem for sending the first modem a call waiting acknowledgment signal, activation of the acknowledgment signal generator causing the second modem to enter the idle state, such that the second modem remains connected to the telephonic communications link, but ceases sending and receiving data; and
(ii) a resumption signal receiver responsive to the receipt of the resumption signal from the first modem, the second modem responding to the receipt of the resumption signal by exiting the idle state and resuming the sending and receiving of data.
